# EUROPÄISCHE PATENTSCHRIFT

(11) **EP 3 025 906 B1**
(45) Veröffentlichungstag und Bekanntmachung des Hinweises auf die Patenterteilung: **12.04.2017**
(21) Anmeldenummer: 15191578.2
(22) Anmeldetag: 27.10.2015
(51) Int. Cl.: B60N 3/10, B60R 7/04

(54) **VORRICHTUNG ZUR AUFNAHME VON GETRÄNKEBEHÄLTERN UND ELEKTRONISCHEN GERÄTEN**
DEVICE FOR RECEIVING DRINKS CONTAINERS AND ELECTRONIC DEVICES
DISPOSITIF DE RECEPTION DE RECIPIENTS DE BOISSONS ET APPAREILS ELECTRONIQUES

(30) Priorität: 30.10.2014 DE 202014105208 U
(43) Veröffentlichungstag der Anmeldung: 01.06.2016
(73) Patentinhaber: Dr. Schneider Kunststoffwerke GmbH, 96317 Kronach-Neuses (DE)
(72) Erfinder: Uhlenbusch, Olaf, 96275 Marktzeuln (DE); Grüdl, Alexander, 96317 Kronach (DE); Kim, Zie-Na, 80337 München (DE); Karlsberger, Peter, 1180 Wien (AT); Klimke, Max, 80798 München (DE)
(74) Vertreter: Pröll, Jürgen

(56) Entgegenhaltungen:
- EP-A2- 1 854 672
- DE-A1- 19 633 913
- DE-A1-102009 049 364

## Beschreibung

Es wird eine Vorrichtung zur Aufnahme von Getränkebehältern beschrieben, wobei die Aufnahme dazu ausgebildet ist, elektronische Geräte, Getränkebehälter und andere Utensilien sicher zu halten. Derartige Vorrichtungen werden insbesondere bei Fahrzeugen, wie z.B. Kraftfahrzeugen, eingesetzt.

Eine Vorrichtung zur Aufnahme eines Gerätebehälters wird auch als Cupholder bezeichnet. Cupholder werden jedoch nicht nur dafür verwendet, Getränke bzw. Getränkebehälter zu halten, sondern auch als Ablage für andere Gegenstände (beispielsweise Smartphone, Schlüssel). Darüber hinaus werden häufig Navigationsgeräte in Cupholder eingesetzt. Das Einsetzen bewirkt keine sichere Lagerung, wie dies beispielsweise über eine an der Windschutzscheibe angebrachte Haltevorrichtung erreicht wird, so dass das Navigationsgerät oder auch ein Smartphone bei Bremsmanövern oder bei Kurvenfahrten aus dem Cupholder herausfallen können. Das Smartphone oder das Navigationsgerät können dadurch beschädigt werden. Darüber hinaus stellen Gegenstände, die in einem Fahrzeug unkontrolliert bewegt werden, ein Sicherheitsrisiko dar. Das Navigationsgerät oder das Smartphone können auch dann beschädigt werden, wenn sie nicht aus dem Cupholder herausfallen, und zwar indem sie innerhalb des Cupholders bewegt werden und an Kanten anschlagen. Cupholder sind in erster Linie dazu ausgelegt und ausgebildet, runde Getränkebehälter aufzunehmen. Daher ist eine sichere Lagerung von anderen Utensilien mit einer davon abweichenden Geometrie nicht oder nur bedingt möglich.

DE 10 2006 021 459 A1 offenbart eine Haltevorrichtung für einen Getränkebehälter oder ein elektronisches Kleingerät, wobei der Getränkebehälter oder das elektronische Kleingerät über zwei Klemmelemente gehalten werden. Die Klemmelemente sind mit einem Antrieb verbunden. Der Antrieb wird in Abhängigkeit eines Signals zumindest eines kapazitiven Näherungssensors gesteuert.

Die in DE 10 2006 021 459 A1 offenbarte Haltevorrichtung weist mehrere Nachteile auf. So benötigen die Klemmelemente stets elektrische Energie um verfahren zu werden und sind folglich beweglich gelagert. Bewegliche Teile unterliegen stets einem Verschleiß und können auch blockieren. Der kapazitive Näherungssensor kann ferner ungewollt ausgelöst werden, was zu einem Verfahren der Klemmelemente führt, da der Näherungssensor nicht unterscheiden kann, ob eine Bewegung bzw. Annäherung beabsichtigt oder nicht beabsichtigt ist. Für den Fahrer eines Personenkraftwagens ergibt sich durch die Haltevorrichtung von DE 10 2006 021 459 A1 visuell nicht von vornherein, wie groß die aufzunehmenden Gegenstände sein können. Hiermit ist gemeint, dass einem Fahrer durch den Abstand der Klemmelemente ein Hinweis gegeben ist, welche Abmaße ein Gegenstand maximal aufweisen darf. Jedoch unterscheidet sich die Lagerung der Gegenstände nach einem Verfahren der Klemmelemente oftmals von der Position und Lagerung, wie sie nach dem Einsetzen besteht, so dass die gewünschte Halterung von einem Fahrer nicht erreicht wird.

DE 10 2008 024 694 A1 offenbart eine Haltevorrichtung mit einer drehbaren Aufnahmeeinrichtung. Die Aufnahmeeinrichtung ist in einem Grundkörper um eine Drehachse drehbar gelagert. Die Aufnahmeeinrichtung weist ferner Halteelemente auf, die in Abhängigkeit von der Drehposition der Aufnahmeeinrichtung unterschiedliche Haltefunktionen darstellen. Ein Nachteil besteht hierin, dass die Aufnahmeeinrichtung zuerst verdreht werden muss, was für den Fahrer eines Kraftfahrzeugs während einer Fahrt eine zusätzliche Belastung darstellt. Darüber hinaus bedingt die Ausbildung der Haltevorrichtung mit der drehbaren Aufnahmeeinrichtung eine bestimmte Anordnung im Kraftfahrzeug, so dass die Größe der aufzunehmenden Gegenstände limitiert ist. Ferner ist das Gewicht der aufzunehmenden Gegenstände zu berücksichtigen, so dass die in DE 10 2008 024 694 A1 offenbarte Haltevorrichtung nicht dafür ausgebildet ist oder entsprechend angepasst werden kann, um beispielsweise Tablet-Computer zu halten.

Eine ähnliche Vorrichtung wird in der DE 10 2008 024 700 A1 offenbart, wobei die Haltevorrichtung eine schwenkbare Klappe aufweist.

DE 10 2008 024 695 A1 offenbart eine Haltevorrichtung für Staugut mit einem Grundkörper, der eine als Cupholder ausgebildete Aufnahme aufweist und welcher ein Einsatzteil zugeordnet ist, das in die Aufnahme des Grundkörpers einsetzbar ist. Das Einsatzteil umfasst eine Halteaussparung, durch welche einander gegenüberliegende Segmente voneinander unterteilt sind. Allerdings besitzt diese Haltevorrichtung keine Zwischenwand, was sich nachteilig auswirkt, deren äußere Wandabschnitte parallel zu den gegenüberliegenden Seitenwänden und versetzt zueinander verlaufen, sodass eine vorgebare flexible Unterteilung nicht gegeben ist.

DE 10 2009 043 768 A1 und DE 10 2009 043 771 A1 offenbaren jeweils eine Haltevorrichtung für Staugut mit einem Grundkörper, in dem elastische Bandelemente zur Fixierung der in den Grundkörper einzufügende Gegenstände aufweist.

GB 2 466 356 A und GB 2 474 138 A offenbaren jeweils eine Haltevorrichtung für Staugut mit einem Grundkörper in dem elastische Bandelemente zur Fixierung der in den Grundkörper einzufügende Gegenstände angeordnet sind. DE 10 2009 049364 offenbart eine gattungsgemäße Vorrichtung.

Aufgabe der vorliegenden Erfindung ist es, eine multifunktionale Ablage anzugeben, die eine lagerichtige Position von verschiedenen elektronischen Geräten und weiteren Utensilien sowie von Getränkebehältern ermöglicht, wobei keine teuren zusätzlichen Komponenten vorgesehen sind oder bewegliche Teile vorgesehen sein müssen.

Die Aufgabe wird durch eine Vorrichtung mit den in Anspruch 1 angegebenen technischen Merkmalen gelöst. Vorteilhafte Weiterbildungen sind in den Unteransprüchen im Detail angegeben.

Eine Vorrichtung zur Aufnahme von Getränkebehältern, elektronischen Geräten und Utensilien, welche die vorstehend genannte Aufgabe löst, weist eine Aufnahme mit einer Bodenfläche und mindestens zwei gegenüberliegenden, im Wesentlichen parallel zueinander verlaufenden Seitenwänden auf, wobei sich zwischen den gegenüberliegenden Seitenwänden eine Zwischenwand erstreckt, deren äußere Wandabschnitte parallel zu den gegenüberliegenden Seitenwänden und versetzt zueinander verlaufen und die äußeren Wandabschnitte über einen Verbindungsabschnitt miteinander verbunden sind.
Die Wandabschnitte liegen jeweils so den gegenüberliegenden Seitenwänden gegenüber, dass ein erster Wandabschnitt zu einer ersten Seitenwand einen geringen Abstand aufweist, beispielsweise 20 mm bis 30 mm, und der erste Wandabschnitt zu einer zweiten Seitenwand einen dazu größeren Abstand aufweist, beispielsweise 60 mm bis 80 mm. Ein zweiter Wandabschnitt weist zu der ersten Seitenwand einen größeren Abstand, beispielsweise 60 mm bis 80 mm, und zu der zweiten Seitenwand einen geringeren Abstand, beispielsweise 20 mm bis 30 mm, auf. Durch die Anordnung der Wandabschnitte werden Aufnahmefächer gebildet, die eine ausreichende Größe für Getränkebehälter haben und zudem die Aufnahme von elektronischen Geräten, wie beispielsweise Navigationsgeräte, Smartphones, Phablets oder Tablet-Computer, ermöglichen, wobei die elektronischen Geräte sicher gehalten werden. Die Zwischenwand teilt die Aufnahme, und zwar so, dass die Aufnahmefächer versetzt gegenüberliegen. Der Verbindungsabschnitt verbindet die äußeren Wandabschnitte und stellt einen Übergang innerhalb der Aufnahmefächer bereit. Die Aufnahmefächer weisen einen Bereich mit einem größeren Fach und einen Bereich mit einem kleineren Fach auf. Das größere Fach und das kleinere Fach weisen unterschiedliche Abstände von den ihnen zugeordneten Wandabschnitten zu einer Seitenwand auf, wobei das größere Fach einen größeren Abstand von einem Wandabschnitt zu einer Seitenwand und das kleinere Fach einen geringeren Abstand eines Wandabschnitts zu der Seitenwand aufweist.

Die äußeren Wandabschnitte und der Verbindungsabschnitt können derart angeordnet sein, dass die Aufnahme im Wesentlichen zwei gleich große Aufnahmefächer aufweist.

Die Aufnahme kann an mindestens einem Seitenbereich zwischen den gegenüberliegenden Seitenwänden eine Öffnung aufweisen. Über die seitliche Öffnung können beispielsweise Tablet-Computer seitlich eingeschoben werden oder teilweise aus einem Aufnahmefach herausragen. Der Verbindungsabschnitt kann geradlinig oder gebogen verlaufen. Ferner kann der Verbindungsabschnitt auch stufenförmig und abgesetzt ausgebildet sein. In Abhängigkeit der Länge der Wandabschnitte können hierbei verschieden große Aufnahmebereiche für Getränkebehälter gebildet werden. Die abgesetzte Ausführung vergrößert mit zunehmenden Abstand des Aufnahmefachs von der Mitte der Aufnahme das Aufnahmefach.

Mindestens die Bodenfläche eines der durch die äußeren Wandabschnitte, den Verbindungsabschnitt und die Seitenwände gebildeten Aufnahmefächer kann eine Beleuchtung aufweisen. Die Beleuchtung dient dazu, einem Fahrer oder Beifahrer anzuzeigen, wo sich das Aufnahmefach befindet. Insbesondere bei Nachtfahrten oder ungünstigen Beleuchtungsverhältnissen werden dem Fahrer und dem Beifahrer die Position angezeigt.

Die Bodenfläche kann einen Lichtleiter aufweisen, der sich entlang der Bodenfläche erstreckt. Der Lichtleiter kann beispielsweise entlang der Seitenwand bzw. Seitenwände und der Zwischenwand verlaufen. Die Bodenfläche kann dazu mindestens eine Öffnung aufweisen, in welcher der Lichtleiter aufgenommen ist, so dass der Lichtleiter sichtbar ist.

Die Bodenfläche kann mindestens einen transparenten oder teiltransparenten, z.B. aus einem diffusen Kunststoff bestehenden, Bereich aufweisen, der über einem Lichtleiter angeordnet ist. In diesen Ausführungen erfolgt die Beleuchtung über den transparenten oder teiltransparenten Bereich und der transparente oder teiltransparente Bereich werden von einem Lichtleiter illuminiert, der unterhalb der Bodenfläche verläuft. Hierzu muss der Lichtleiter nicht unbedingt maßstäblich entsprechend dem transparenten Bereich ausgebildet sein, sondern kann auch andere Ausgestaltungen aufweisen.

Der Lichtleiter kann in weiteren Ausführungen aus einem volumenstreuenden Kunststoff bestehen. Volumenstreuende Kunststoffe ermöglichen eine homogene Beleuchtung. Lichtleiter aus Kunststoff werden häufig mit Prismenstrukturen versehen, um das an einer Seite eintretende Licht in gewünschter Weise zu brechen und die Beleuchtung entlang der Länge des Lichtleiters möglichst konstant bzw. homogen zu halten. Jedoch gibt es auch bei derartigen Lichtleitern eine Abnahme der Beleuchtung mit Abstand zu der Lichtquelle. Ferner treten Rippelstrukturen an der Oberfläche des Lichtleiters auf, die der Seite mit einer Prismenstruktur gegenüberliegt. Um dies zu verhindern, werden volumenstreuende Kunststoffe eingesetzt, die eine homogene Beleuchtung über die Länge des Lichtleiters bereitstellen. Volumenstreuende Kunststoffe sind diffus streuende, transparente Kunststoffe, wie beispielsweise PMMA (Polymethylmethacrylat) und PC (Polycarbonat), welchen transparente Nanopartikel zugemischt werden, die je nach Anwendung aus anderen Kunststoffen oder hochbrechenden Materialien, wie Titandioxid (TiO₂) bestehen. Darüber hinaus sind auch andere volumenstreuende Kunststoffe bekannt, die hierfür verwendet werden können. Im Gegensatz zur Lichtstreuung an Grenzflächen (beispielsweise an Prismenstrukturen eines Lichtleiters) findet hier eine sogenannte Volumenstreuung statt, wobei Licht auf Partikel oder andere Inhomogenitäten trifft und aus einer ursprünglichen Richtung abgelenkt wird.

Die Beleuchtung kann auch ein Lichttextil aufweisen. Lichttextilien sind insbesondere Glasfasern, die vorzugsweise mindestens in einer Richtung verlaufen und über andere Fasern, vorzugsweise Kunststofffasern, miteinander verbunden sind. Lichttextilien können leicht verformt werden und sind daher gegenüber starren Lichtleitern flexibel einsetzbar.

Der Lichtleiter und/oder die Lichttextile können mit mindestens einer Lichtquelle verbunden sein. Über die Lichtquelle wird das Licht in den Lichtleiter bzw. das Lichttextil eingebracht.

Die Lichtquelle kann mindestens eine lichtemittierende Diode (LED) aufweisen. LEDs weisen im Vergleich zu konventionellen Leuchtmitteln eine deutlich höhere Lebensdauer auf und verbrauchen dabei deutlich weniger Energie.

Die Helligkeit und/oder Farbe der mindestens einen Lichtquelle kann veränderbar und steuerbar sein. Hierüber lässt sich die Beleuchtung mindestens eines Aufnahmefachs der Aufnahme anhand verschiedener Parameter steuern.

Die durch die äußeren Wandabschnitte, den Verbindungsabschnitt und die Seitenwände gebildeten Aufnahmefächer können an den einander zugewandten Seiten eine weiche Beschichtung aufweisen. Hierzu werden beispielsweise thermoplastische Elastomere (TPE) oder eine Beflockung verwendet. Die weiche Beschichtung verhindert, dass beispielsweise elektronische Geräte, wie Tablet-Computer, verkratzt werden, wenn diese an den Seiten der Aufnahmefächer anliegen.

Die Kanten der durch die äußeren Wandabschnitte, den Verbindungsabschnitt und die Seitenwände gebildeten Aufnahmefächer kann eine umlaufende Rippe, Fase und/oder Beschichtung aufweisen. Die Rippe, Fase und/oder Beschichtung dienen ebenso zum Schutz eines aufgenommenen elektronischen Geräts. Ferner kann eine Rippe oder Fase derart ausgerichtet sein, dass in den Aufnahmefächern aufgenommene Getränkebehälter sicher gehalten werden. Hierzu sind beispielsweise gummiartige Abdeckungen bekannt, die ein Verrutschen erschweren.

Mindestens die Bodenfläche eines der durch die äußeren Wandabschnitte, den Verbindungsabschnitt und die Seitenwände gebildeten Aufnahmefächer und/oder die Wandabschnitte, der Verbindungsabschnitt und/oder die Seitenwände können Temperiereinrichtungen aufweisen. Temperiereinrichtungen dienen dazu, ein in einem Getränkebehälter aufgenommenes Getränk in dem Aufnahmefach zu kühlen oder warm zu halten. Temperiereinrichtungen für Cupholder sind aus dem Stand der Technik bekannt. Wird die Funktionalität dieser über die Temperiereinrichtungen auf die vorliegende Vorrichtung übertragen, so wird die Funktionalität der hierin beschriebenen Vorrichtung weiter verbessert. Die Temperiereinrichtungen und die mindestens eine Lichtquelle können in Abhängigkeit voneinander steuerbar sein. Hierzu sind beispielsweise Sensoren vorhanden, welche erfassen, ob das in dem Getränkebehälter befindliche Getränk warm oder kalt ist. Vorzugsweise wird in Abhängigkeit der erfassten Temperatur bzw. des Temperaturbereichs (warm oder kalt) die mindestens eine Temperiereinrichtungen gesteuert, so dass diese Temperiereinrichtungen das Getränk weiter kühlen oder warmhalten. Dazu wird in Abhängigkeit der erfassten Temperatur oder des erfassten Temperaturbereichs die Beleuchtung beispielsweise so gesteuert, dass das Aufnahmefach mit einem kalten Getränk blau beleuchtet wird und das Aufnahmefach mit einem warmen Getränk rot. Dem Fahrer oder Beifahrer wird hierdurch signalisiert, dass ein warmes oder kaltes Getränk aufgenommen ist. Insbesondere bei heißen Getränken ist dies vorteilhaft, wobei der Fahrer oder Beifahrer durch die Farbe Rot erkennt, dass das Getränk sehr heiß ist. In weiteren Ausführungen kann auch eine neutrale Beleuchtung vorgesehen sein, falls das Getränk Raumtemperatur aufweist. Eine weitere Ausführung sieht vor, dass eine bestimmte Beleuchtung in einer Farbe für ein Aufnahmefach vorgenommen wird, falls ein elektronisches Gerät oder ein anderes Utensil darin aufgenommen sind.

Die Vorrichtung kann mindestens eine Schnittstelle zur Verbindung mit einem elektronischen Gerät aufweisen. Über die Schnittstelle kann das elektronische Gerät mit einer Fahrzeugsteuerung kommunizieren oder aufgeladen werden (z.B. NFC, induktives Laden, etc.).

Zudem erkennt eine Steuerung, dass ein elektronisches Gerät aufgenommen worden ist und löst eine Beleuchtung in einer bestimmten Farbe aus, wie vorstehend bereits angegeben. Ferner kann auch der (Betriebs-)Zustand des elektronischen Geräts durch eine Farbe oder einen Farbwechsel signalisiert und angezeigt werden (z.B. Laden des elektronischen Geräts über die Schnittstelle).

Mindestens eines der durch die äußeren Wandabschnitte, den Verbindungsabschnitt und die Seitenwände gebildeten Aufnahmefächer kann an der Bodenfläche und/oder an den Seitenwänden mindestens ein schwenkbar oder verschiebbar gelagertes Halteelement aufweisen, welches in das mindestens eine Aufnahmefach ragt und gegen die Kraft einer Federeinrichtung an oder in die Bodenfläche und/oder die Seitenwände verlagerbar ist.

Das mindestens eine Halteelement kann derart in das Aufnahmefach ragen, dass
- zwischen dem mindestens einen Halteelement und einem Wandabschnitt, dem Verbindungsabschnitt oder einer Seitenwand, oder
- zwischen mindestens zwei Haltelementen
ein solcher Abstand besteht, dass ein elektronisches Gerät dazwischen einsetzbar ist.

Das Halteelement dient in diesem Fall dazu, das elektronische Gerät zusätzlich zu stützen. Über die Federeinrichtung wird das Halteelement jedoch verschwenkt oder verschoben, so dass beispielsweise ein Getränkebehälter einsetzbar ist. Das Halteelement dient dazu, den Querschnitt des Aufnahmefachs zu vergrößern bzw. zu verkleinern.

In den vorstehend beschriebenen Ausführungen ist der Abstand zwischen den Seitenwänden und den Zwischenwänden jeweils so groß, dass entsprechend der vorgesehenen Aufnahme für verschiedene Utensilien ein ausreichender Abstand besteht. Entsprechend ist auch die Höhe der Seitenwände und der Zwischenwand so ausgebildet, dass beispielsweise ein Tablet-Computer sicher dazwischen gehalten werden kann, jedoch das Display zu einem großen Teil noch sichtbar ist.

Die Aufnahmeteile (Bodenfläche, Seitenwände, Zwischenwand) können aus einem Kunststoff bestehen. Ferner können Blenden und andere Verzierungselemente mit der Vorrichtung verbunden sein. Auch ist es möglich, Komponenten der Vorrichtung in Abhängigkeit des gewünschten äußeren Erscheinungsbildes aus Metall oder Holz auszubilden.

Weitere Vorteile, Merkmale sowie Ausgestaltungen ergeben sich aus der nachfolgenden Figurenbeschreibung von nicht einschränkend zu verstehenden Ausführungsbeispielen.

In den Zeichnungen zeigen:
- Fig. 1: eine schematische Darstellung einer Vorrichtung zur Aufnahme von Getränkebehältern, elektronischen Geräten und anderen Gegenstände in perspektivischer Ansicht;
- Fig. 2: eine weitere schematische Darstellung einer Vorrichtung zur Aufnahme von Getränkebehältern, elektronischen Geräten und anderen Gegenständen mit einer Blende in perspektivischer Ansicht;
- Fig. 3: eine weitere schematische Darstellung einer Vorrichtung zur Aufnahme von Getränkebehältern, elektronischen Geräten und anderen Gegenständen ohne Blende in perspektivischer Ansicht;
- Fig. 4: eine schematische Darstellung eines Lichttextils und von Lichtleitern in perspektivischer Ansicht;
- Fig. 5: eine schematische Darstellung eines Lichttextils und Mittel zum Einkoppeln von Licht in perspektivischer Ansicht;
- Fig. 6: eine weitere schematische Darstellung eines Lichttextils, Mittel zum Einkoppeln von Licht und Glasfasern in perspektivischer Ansicht;
- Fig. 7: eine schematische Draufsicht auf eine Vorrichtung zur Aufnahme von Getränkebehältern, elektronischen Geräten und anderen Gegenständen; und
- Fig. 8a-c: eine schematische Darstellung eines Aufnahmefachs mit einem Halteelement in verschiedenen Stellungen und mit verschiedenen Gegenständen.

In den Figuren mit gleichen Bezugszeichen versehene Teile und Komponenten entsprechen im Wesentlichen einander, solange nichts anderes angegeben ist. Ferner wird darauf verzichtet, Komponenten und Bestandteile zu beschreiben, welche nicht wesentlich für das Verständnis der hierin offenbarten technischen Lehre sind.

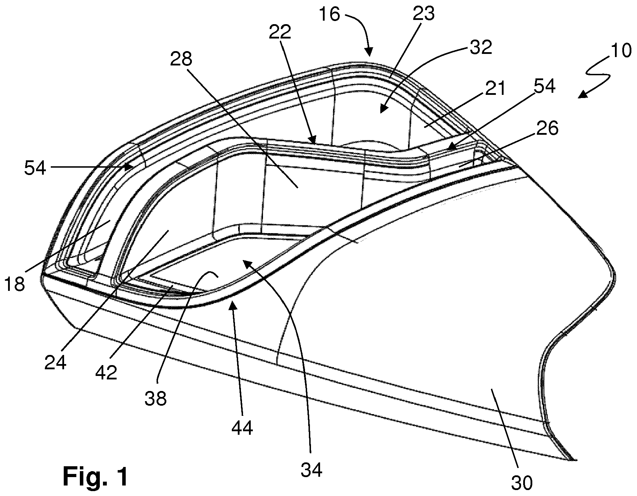

Fig. 1 zeigt eine schematische Darstellung einer Vorrichtung 10 zur Aufnahme von Getränkebehältern 12, elektronischen Geräten und anderen Gegenständen in perspektivischer Ansicht. Getränkebehälter 12 umfassen beispielsweise Flaschen, Dosen, Trinkbecher (aus Kunststoff oder Pappe) oder Getränketüten (Tetrapacks). Elektronische Geräte umfassen beispielsweise Tablet-Computer 14, Smartphones, Phablets bzw. Smartlets, Navigationsgeräte und andere Geräte. Andere Gegenstände umfassen beispielsweise Schlüssel, Münzen, Stifte, Feuerzeuge sowie weitere Utensilien.

Fig. 1 zeigt eine Vorrichtung 10, die Teil einer Mittelkonsole eines Kraftfahrzeugs ist. Die Vorrichtung 10 ist so in die Mittelkonsole aufgenommen, dass sie im Wesentlichen von einem Gehäuse 30 umgeben ist. Das Gehäuse 30 ist Teil einer Abdeckung für die Mittelkonsole.

Die Vorrichtung 10 umfasst eine Aufnahme 16. Die Aufnahme 16 weist zwei Aufnahmefächer 32 und 34 auf. Die Aufnahmefächer 32 und 34 werden zwischen gegenüberliegenden Seitenwänden 18 und 20 der Aufnahme 16 sowie der Zwischenwand 22 gebildet. Die Aufnahme 16 weist an einer Seite einen runden Übergang 23 von der Seitenwand 18 zu einer Seitenwand 21 auf. Von der Seitenwand 21 zu der Seitenwand 20 (in Fig. 1 nicht dargestellt) weist der Übergang einen kleineren Radius auf als im Übergang 23. Der Seitenwand 21 gegenüberliegend ist die Aufnahme 16 offen ausgebildet. Die Aufnahme 16 ist mit einer Blende 44 versehen, welche einen umlaufenden Rand mit einer Fase 54 aufweist.

Das Aufnahmefach 34 weist eine Bodenfläche 38 auf. In die Bodenfläche 38 ist ein Lichtleiter 42 eingesetzt, der zur Beleuchtung des Aufnahmefachs 34 dient. Das Aufnahmefach 32 weist ebenso eine Bodenfläche 36 (in Fig. 1 nicht dargestellt) auf, welche ebenso einen Lichtleiter 40 (in Fig. 1 nicht dargestellt) aufweist. Die Zwischenwand 22 weist Wandabschnitte 24 und 26 und einen Verbindungsabschnitt 28 auf. Die Wandabschnitte 24 und 26 verlaufen im Wesentlichen parallel zu den Seitenwänden 18 und 20. Der Verbindungsabschnitt 28 verbindet die Wandabschnitte 24 und 26. Die Anordnung der Zwischenwand 22 stellt einen großen Aufnahmebereich für das Aufnahmefach 32 und ebenso einen großen Aufnahmebereich 24 für das Aufnahmefach 34 bereit, in welche beispielsweise Getränkedosen eingesetzt werden können. Die Verlängerung des großen Aufnahmebereichs der Aufnahmefächer 32 und 34 mit einem geringen Abstand der Seitenwände 24 und 26 zu den entsprechenden Seitenwänden 18 und 20 stellt einen zusätzlichen Aufnahmeraum für Tablet-Computer 14 (in Fig. 1 nicht dargestellt) dar. So kann beispielsweise ein Tablet-Computer 14 über die Öffnung der Aufnahme 16 seitlich eingeschoben oder von oben eingesetzt werden. Die untere Kante des Tablet-Computers 14 liegt im in das Aufnahmefach 32 eingesetzten Zustand im Wesentlichen im Verbindungsbereich der Bodenfläche 36 und dem Wandabschnitt 24 an. Eine Rückseite des Tablet-Computers 14 liegt an einer oberen Kante im Bereich der Fase 54 an der Seitenwand 18 an. Der Tablet-Computer 14 ist dann über die Seitenwand 18 und den Wandabschnitt 24 sicher in dem Aufnahmefach 32 aufgenommen. In das Aufnahmefach 32 kann auch eine Getränkedose aufgenommen werden, die in dem Bereich zwischen dem Wandabschnitt 26 und der Seitenwand 18 eingesetzt wird. Entsprechend kann in das Aufnahmefach 34 eine Getränkedose in dem Bereich zwischen dem Wandabschnitt 24 und der Seitenwand 20 sowie beispielsweise ein Tablet-Computer 14 in das Aufnahmefach 34 eingesetzt werden, wobei der Tablet-Computer 14 zwischen dem Wandabschnitt 26 und der Seitenwand 18 sicher gehalten wird.

Die Vorrichtung 10 zeichnet sich dadurch aus, dass über die Aufnahme 16 sowohl elektronische Geräte, wie beispielsweise ein Tablet-Computer 14, als auch Getränkebehälter, wie beispielsweise eine Getränkeflasche oder Getränkedose, sicher gehalten werden können, ohne Klemmelemente verlagern zu müssen oder Komponenten der Vorrichtung zu bewegen.

Über die Lichtleiter 40 und 42 können die Aufnahmefächer 32 und 34 beleuchtet werden. Die Beleuchtung der Aufnahmefächer 32 und 34 über die Lichtleiter 40 und 42 kann auch unabhängig voneinander erfolgen. So kann beispielsweise lediglich der Lichtleiter 42 beleuchtet werden oder beide Lichtleiter 40 und 42 werden in verschiedenen Farben beleuchtet. Hierzu sind vorzugsweise Leuchtmittel in Form von LED's vorgesehen. LEDs können einfach angesteuert werden und weisen einen geringen Stromverbrauch und eine extrem hohe Lebensdauer auf. Über LEDs kann zudem ein Farbwechsel einfach realisiert werden. Darüber hinaus können Temperiereinrichtungen für die Aufnahmefächer 32 und 34 vorgesehen sein, die ein Kühlen oder Erwärmen eines in den Aufnahmefächern 32 und 34 aufgenommenen Getränks bereitstellen. Dazu könnten beispielsweise Sensoren vorgesehen sein, welche die Temperatur des Getränks erfassen und demnach die Temperiereinrichtung entsprechend ansteuern, so dass beispielsweise ein warmes Getränk weiter warm gehalten oder ein kühles Getränk weiter gekühlt wird. Ferner können Steuerungsmittel oder Knöpfe bzw. Bedienfelder vorgesehen sein, die die Temperatur der Temperiereinrichtungen für die Aufnahmefächer 32 und 34 steuern. Dies kann beispielsweise mittels einer Benutzereingabe erfolgen.

Die Temperiereinrichtungen und die Leuchtmittel bzw. Lichtquelle für die Lichtleiter 40 und 42 können in Abhängigkeit voneinander gesteuert werden. D. h., wird ein warmes Getränk in einem der Aufnahmefächer 32 oder 34 aufgenommen, so wird beispielsweise eine rote Beleuchtung für das entsprechende Aufnahmefach 32 oder 34 durchgeführt. Bei einem kalten Getränk könnte eine blaue Beleuchtung realisiert werden. Die Beleuchtung kann auch in Abhängigkeit von Sensorsignalen gesteuert werden. D. h. dass eine blaue oder rote Beleuchtung realisiert wird, nachdem die Sensoren ermittelt haben, ob in dem entsprechenden Aufnahmefach 32 oder 34 ein warmes oder ein kaltes Getränk aufgenommen worden ist. Darüber hinaus können die Aufnahmefächer 32 und 34 Schnittstellen zum Anschluss eines in den Aufnahmefächern 32 oder 34 aufgenommenen elektronischen Geräts mit einer Fahrzeugsteuerung oder einer Fahrzeugenergieversorgung aufweisen. Hierüber ist es möglich, einen in dem Aufnahmefach 32 oder in dem Aufnahmefach 34 aufgenommenen Tablet-Computer 14 zu laden oder eine Kommunikation über die Schnittstelle, beispielsweise zum Abspielen von Liedern, durchzuführen. Die Beleuchtung kann auch mit einem Näherungssensor gekoppelt sein, so dass der Grad der Beleuchtung der Aufnahmefächer 32 und 34 zu- bzw. abnimmt, je nachdem ob sich ein Gegenstand oder die Hand einer Person den Aufnahmefächern 32 und 34 nähern. Auch kann der Farbton verändert werden.

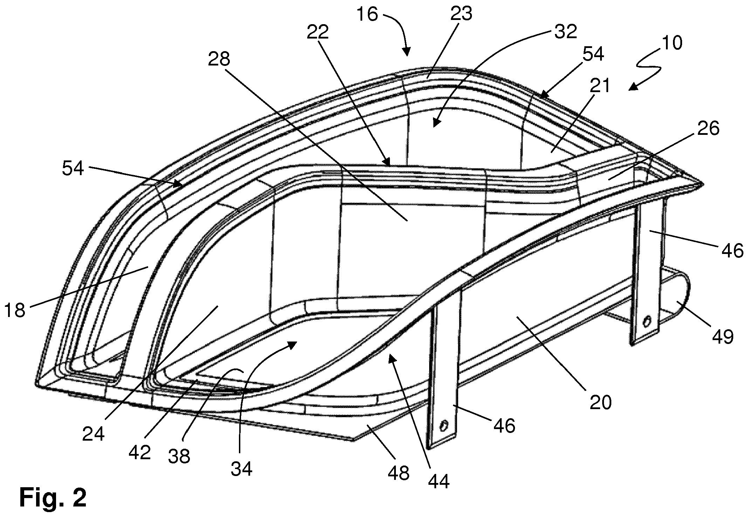

Fig. 2 zeigt eine weitere schematische Darstellung einer Vorrichtung 10 zur Aufnahme von Getränkebehältern, elektronischen Geräten und anderen Gegenständen mit einer Blende 44 in perspektivischer Ansicht ohne das Gehäuse 30 einer Mittelkonsole eines Kraftfahrzeugs.

Die in Fig. 2 dargestellte Vorrichtung 10 entspricht im Wesentlichen der in Fig. 1 gezeigten Vorrichtung 10.

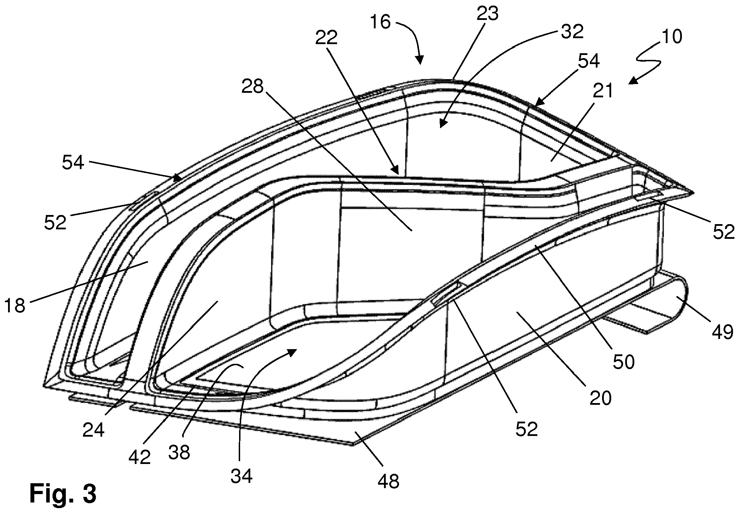

Fig. 3 zeigt eine weitere schematische Darstellung einer Vorrichtung 10 zur Aufnahme von Getränkebehältern, elektronischen Geräten und anderen Gegenständen ohne Blende 44 in perspektivischer Ansicht. Die Vorrichtung 10 weist einen umlaufenden Rand 50 auf, der Öffnungen 52 aufweist. Über die Öffnungen 52 wird die Vorrichtung 10 mit der Blende 44 verbunden. Die Blende 44 weist zudem Stege 46 mit Öffnungen auf, über welche die Vorrichtung 10 und die Blende 44 in einer Mittelkonsole eines Kraftfahrzeugs angeordnet und fixiert werden.

Die Blende 44 liegt auf dem Rand 50 auf. Der Rand 50 weist wie die Blende 44 eine umlaufende Fase 54 auf. Die Blende 44 ist im Wesentlichen so ausgebildet, dass sie der Form und Ausgestaltung des umlaufenden Rands 50 entspricht. Die Blende 44 dient in erster Linie zu dekorativen Zwecken und kann beispielsweise verchromt ausgebildet sein. Zudem kann die Blende 44 mit weichen Beschichtungen versehen sein, die im eingesetzten Zustand von unterhaltungselektronischen Geräten (beispielsweise Tablet-Computer 14) ein Verkratzen dieser Geräte verhindern.

In den Fig. 2 und 3 ist zudem ein Lichttextil 48 dargestellt. Das Lichttextil 48 kann über weitere Mittel beleuchtet werden, so dass von dem Lichttextil 48 Licht ausgestrahlt wird. Das von dem Lichttextil 48 ausgestrahlte Licht durchdringt die Lichtleiter 40 und 42, so dass eine Beleuchtung der Aufnahmefächer 32 und 34 realisiert wird.

Das Lichttextil 48 ist in einem Bereich 49 gebogen. Von diesem Bereich aus verlaufen Glasfasern 59 (in Fig. 3 nicht dargestellt) zu einem Einkoppelelement 58, welches in Fig. 3 ebenso nicht dargestellt ist.

Das Lichttextil 48 besteht aus einer Vielzahl von parallel zueinander angeordneten Glasfasern 59. In die Glasfasern 59 wird über das Einkoppelelement 58 und eine Lichtquelle Licht eingebracht. Die Glasfasern 59 werden darüber beleuchtet. Die Lichtleiter 40 und 42 sind vorzugsweise aus einem volumenstreuenden Kunststoff ausgebildet. Ein volumenstreuender Kunststoff bewirkt keine Abnahme der Beleuchtung mit zunehmender Länge eines Lichtleiters ausgehend von einer Lichtquelle. Es treten auch keine Rippelstrukturen an der Oberfläche des Lichtleiters auf. Die Glasfasern 59 des Lichttextils 48 können ebenso aus einem volumenstreuenden Kunststoff ausgebildet sein. Zudem sind die Glasfasern 59 des Lichttextils 48 über weitere Kunststofffasern miteinander verbunden.

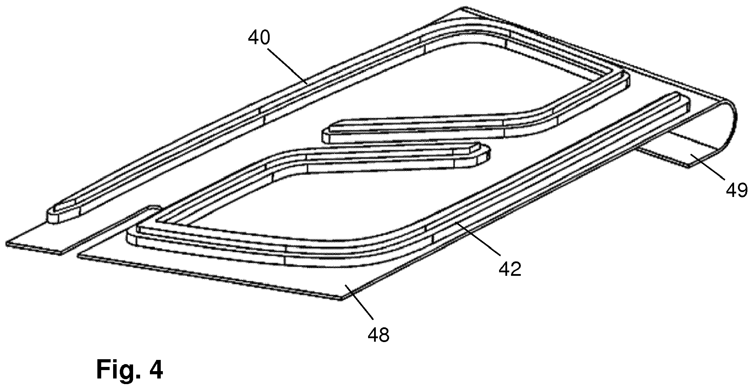

Fig. 4 zeigt eine schematische Darstellung eines Lichttextiles 48 und von Lichtleitern 40 und 42 in perspektivischer Ansicht. Das von dem Lichttextil 48 ausgestrahlte Licht tritt in die Lichtleiter 40 und 42 ein. Die Lichtleiter 40 und 42 werden dadurch beleuchtet und bewirken eine Beleuchtung der darüber angeordneten Aufnahmefächer 32 und 34. Die Bodenflächen 36 und 38 der Aufnahmefächer 32 und 34 weisen hierzu Öffnungen auf, in welchen die oberen Strukturen der Lichtleiter 40 und 42 aufgenommen sind. Die restlichen Flächen der Bodenflächen 36 und 38 sind lichtundurchlässig. Hierüber werden die Aufnahmefächer 32 und 34 nur durch die Lichtleiter 40 und 42 beleuchtet. In alternativen Ausführungsformen können auch die Bodenflächen 36 und 38 vollständig aus einem transparenten Kunststoff bzw. volumenstreuenden Kunststoff bestehen, so dass die gesamten Bodenflächen 36 und 38 illuminiert werden.

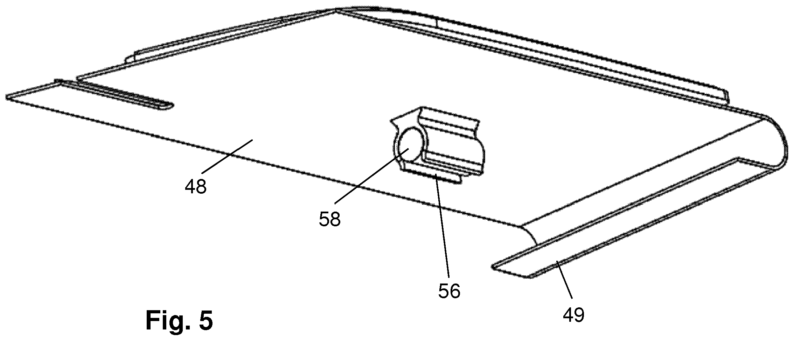

Fig. 5 zeigt eine schematische Darstellung eines Lichttextils und Mittel zum Einkoppeln von Licht in perspektivischer Ansicht. Das Lichttextil 48 liegt auf einem Lichttextilträger (in den Figuren nicht dargestellt) auf. An dem Lichttextilträger ist eine Klammer 56 angeordnet, die das Einkoppelelement 58 hält. Das Einkoppelelement 58 ist mit einer Lichtquelle, beispielsweise LED, verbunden oder weist eine LED auf. Über die Klammer 56 wird das Einkoppelelement 58 gesichert. Von dem Einkoppelelement 58 verlaufen Glasfasern 59 zu dem Bereich 49 des Lichttextils 48.

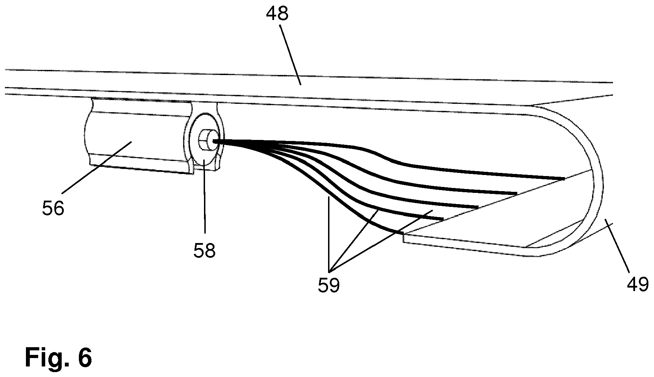

Fig. 6 zeigt eine weitere schematische Darstellung eines Lichttextils 48, Mittel zum Einkoppeln von Licht und Glasfasern 59 in perspektivischer Ansicht. In Fig. 6 ist wieder die Klammer 56 dargestellt, die das Einkoppelelement 58, aufweisend eine Lichtdiode, hält. Die Leuchtdiode emittiert Licht, welches von dem Ansatz des Einkoppelelements 58 in die Glasfasern 59 eingebracht wird. Die Glasfasern 59 verlaufen zu dem Abschnitt 49 des Lichttextils 48 und sind mit weiteren Glasfasern des Lichttextils 48 verbunden oder die Glasfasern 59 des Lichttextils 48 verlaufen ausgehend von dem Ansatz des Einkoppelelements 58 durch das Lichttextil 48. In Fig. 6 sind nur fünf Glasfasern 59 dargestellt, jedoch umfasst das Lichttextil 48 eine deutlich höhere Anzahl von Glasfasern 59. Glasfasern 59 verlaufen entlang des Lichttextils 48 parallel zueinander, wobei in jede der Glasfasern 59 Licht eingebracht wird. In Abhängigkeit des eingebrachten Lichts über das Einkoppelelement 58 kann das Lichttextil 48 dann in verschiedenen Farben und mit verschiedener Helligkeit leuchten.

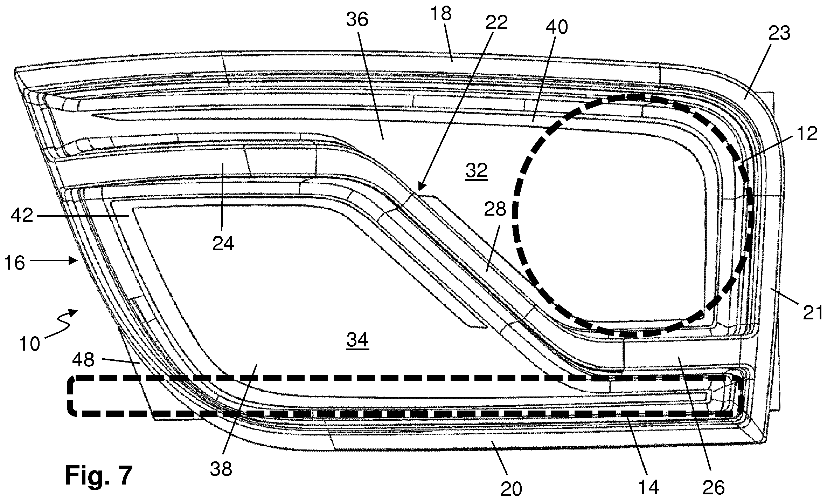

Fig. 7 zeigt eine schematische Draufsicht auf eine Vorrichtung 10 zur Aufnahme von Getränkebehältern 12, elektronischen Geräten und anderen Gegenständen. Die Vorrichtung 10 entspricht im Wesentlichen den bereits mit Bezug auf die Figuren 1 bis 6 gezeigten Vorrichtungen 10. Aus Fig. 7 ist ersichtlich, wie die Anordnung der Lichtleiter 40 und 42 in den Aufnahmefächern 32 und 34 verläuft. Ferner zeigt Fig. 7 die Ausbildung der Aufnahmefächer 32 und 34 sowie der Bereiche zur Aufnahme von Getränkebehältern 12 in dem Abschnitt des Aufnahmefachs 32 zwischen der Seitenwand 18 und dem Wandabschnitt 26 und in dem Abschnitt des Aufnahmefachs 34 zwischen der Seitenwand 32 und dem Wandabschnitt 24. Elektronische Geräte, wie beispielsweise ein Tablet-Computer 14, werden in dem Aufnahmefach 32 insbesondere zwischen der Seitenwand 18 und dem Wandabschnitt 24 und dem Aufnahmefach 34 zwischen dem Wandabschnitt 26 und der Seitenwand 20 gehalten. Die gestrichelten Linien zeigen, wie ein Getränkebehälter 12 in dem Aufnahmefach 32 und ein Tablet-Computer 14 in dem Aufnahmefach 34 aufgenommen werden können.

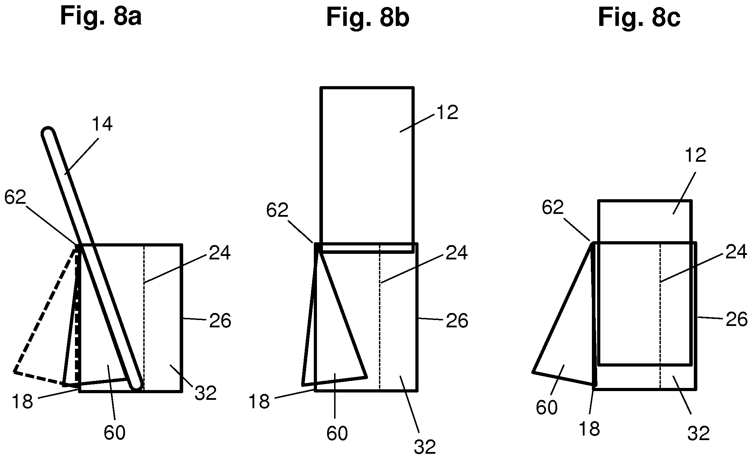

Die Figuren 8a-c zeigen eine schematische Darstellung eines Aufnahmefachs 32 mit einem Halteelement 60 in verschiedenen Stellungen und mit verschiedenen Gegenständen.

Fig. 8a zeigt ein Aufnahmefach 32 mit einem darin aufgenommenen Tablet-Computer 14. Der Tablet-Computer 14 ist so in das Aufnahmefach 32 eingesetzt, dass die untere Kante des Tablet-Computers 14 im Wesentlichen an dem Wandabschnitt 24 und der Tablet-Computer 14 im mittleren Bereich an der oberen Kante der Seitenwand 18 anliegt. Hierüber ist der Tablet-Computer 14 sicher in dem Aufnahmefach 32 aufgenommen und das Display, welches sich im Wesentlichen flächig über den Tablet-Computer 14 erstreckt, zumindest teilweise sichtbar.

Ein Halteelement 60, welches um einen Drehpunkt 62 verschwenkbar ist, befindet sich bei der in Fig. 8a dargestellten Ansicht in einem unbetätigten Zustand, wobei das Halteelement 60 durch eine Federeinrichtung (in den Figuren 8a-c nicht dargestellt) in das Aufnahmefach 32 aus der Seitenwand 18 herausgedrückt wird. Das Halteelement 60 dient dazu, den Tablet-Computer 14 zusätzlich abzustützen. Die gestrichelte Darstellung von Fig. 8a zeigt das Halteelement 60 in einem verschwenkten Zustand. Hierbei wird das Halteelement 60 um den Drehpunkt 62 verschwenkt und in eine hinter der Seitenwand 18 befindlichen Aufnahme oder in einen dafür vorgesehenen Raum bewegt.

Ist der Tablet-Computer 14 aus dem Aufnahmefach 32 entnommen worden und soll stattdessen ein Getränkebehälter 12 in das Aufnahmefach 12 aufgenommen werden, so wird der Getränkebehälter 12, wie in Fig. 8b dargestellt, von oben in das Aufnahmefach 32 eingesetzt. Der untere Rand des Getränkebehälters 12 drückt hierbei gegen das Halteelement 60, welches mit zunehmendem Druck durch eine Verlagerung des Getränkebehälters 12 nach unten um den Drehpunkt 62 verschwenkt wird, bis das Halteelement 60 vollständig den Aufnahmeraum 62 für den Getränkebehälter 12 zwischen der Seitenwand 18 und dem Wandabschnitt 26 freigibt (fig. 8c).

Der Getränkebehälter 12 wird hierbei zwischen der Seitenwand 18 und dem Wandabschnitt 26 gehalten, wie dies in Fig. 7 schematisch durch die gestrichelte Linie dargestellt ist. Der Tablet-Computer 14 wird analog zu der in Fig. 7 gezeigten Darstellung zwischen dem Wandabschnitt 24 und der Seitenwand 18 gehalten.

Anstelle eines verschwenkbar gelagerten Halteelements 60 könnte das Halteelement 60 auch parallel zur Bodenfläche 36 des Aufnahmefachs 32 verschoben werden.

### Bezugszeichenliste

- 10: Vorrichtung
- 12: Getränkebehälter
- 14: Tablet-Computer
- 16: Aufnahme
- 18: Seitenwand
- 20: Seitenwand
- 21: Seitenwand
- 22: Zwischenwand
- 23: Übergang
- 24: Wandabschnitt
- 26: Wandabschnitt
- 28: Verbindungsabschnitt
- 30: Gehäuse
- 32: Aufnahmefach
- 34: Aufnahmefach
- 36: Bodenfläche
- 38: Bodenfläche
- 40: Lichtleiter
- 42: Lichtleiter
- 44: Blende
- 46: Steg
- 48: Lichttextil
- 49: Bereich
- 50: Rand
- 52: Öffnungen
- 54: Fase
- 56: Klammer
- 58: Einkoppelelement
- 59: Glasfaser
- 60: Halteelement
- 62: Drehpunkt

## Patentansprüche

1. Vorrichtung zur Aufnahme von Getränkebehältern (12), elektronischen Geräten und Utensilien, aufweisend eine Aufnahme (16) mit einer Bodenfläche und mindestens zwei gegenüberliegenden, im Wesentlichen parallel zueinander verlaufenden Seitenwänden (18, 20), wobei sich zwischen den gegenüberliegenden Seitenwänden (18, 20) eine Zwischenwand (22) erstreckt, **dadurch gekennzeichnet, dass** die äußeren Wandabschnitte (24,26) der Zwischenwand (22) parallel zu den gegenüberliegenden Seitenwänden (18, 20) und versetzt zueinander verlaufen und dass die äußeren Wandabschnitte (24, 26) über einen Verbindungsabschnitt (28) miteinander verbunden sind.

2. Vorrichtung nach Patentanspruch 1, wobei die äußeren Wandabschnitte (24, 26) und der Verbindungsabschnitt (28) derart angeordnet sind, dass die Aufnahme (16) im Wesentlichen zwei gleich große Aufnahmefächer (32, 34) aufweist.

3. Vorrichtung nach Patentanspruch 1 oder 2, wobei die Aufnahme (16) an mindestens einem Seitenbereich zwischen den gegenüberliegenden Seitenwänden (18, 20) eine Öffnung aufweist.

4. Vorrichtung nach einem der Patentansprüche 1 bis 3, wobei der Verbindungsabschnitt (28) geradlinig, gebogen oder abgesetzt verläuft.

5. Vorrichtung nach einem der Patentansprüche 1 bis 4, wobei mindestens die Bodenfläche (36; 38) eines der durch die äußeren Wandabschnitte (24; 26), den Verbindungsabschnitt (28) und die Seitenwände (18; 20) gebildeten Aufnahmefächer (32; 34) eine Beleuchtung aufweist und/oder die Bodenfläche (36; 38) einen Lichtleiter (40; 42) aufweist, der sich entlang der Bodenfläche (36; 38) erstreckt und/oder die Bodenfläche (36; 38) mindestens einen transparenten oder teiltransparenten Bereich aufweist, der über einem Lichtleiter angeordnet ist und/oder der Lichtleiter (40; 42) aus einem volumenstreuenden Kunststoff besteht.

6. Vorrichtung nach Patentanspruch 5, wobei die Beleuchtung ein Lichttextil (48) aufweist.

7. Vorrichtung nach einem der Patentansprüche 5 oder 6, wobei der Lichtleiter und/oder das Lichttextil (48) mit mindestens einer Lichtquelle verbunden sind und/oder die Lichtquelle mindestens eine lichtemittierende Diode aufweist und/oder die Helligkeit und/oder Farbe der mindestens einen Lichtquelle veränderbar und steuerbar ist.

8. Vorrichtung nach einem der Patentansprüche 1 bis 7, wobei die durch die äußeren Wandabschnitte (24, 26), den Verbindungsabschnitt (28) und die Seitenwände (20, 22) gebildeten Aufnahmefächer (32, 34) an den einander zugewandten Seiten eine weiche Beschichtung aufweisen.

9. Vorrichtung nach einem der Patentansprüche 1 bis 8, wobei die Kanten der durch die äußeren Wandabschnitte (24, 26), den Verbindungsabschnitt (28) und die Seitenwände (20, 22) gebildeten Aufnahmefächer (32, 34) eine umlaufende Rippe, Fase (54) und/oder Beschichtung aufweisen und/oder mindestens die Bodenfläche (36; 38) eines der durch die äußeren Wandabschnitte (24; 26), den Verbindungsabschnitt (28) und die Seitenwände (18; 20) gebildeten Aufnahmefächer (32; 34) und/oder die Wandabschnitte (24, 26), der Verbindungsabschnitt (28) und/oder die Seitenwände (18, 20) Temperiereinrichtungen aufweisen und/oder die Temperiereinrichtungen und die mindestens eine Lichtquelle in Abhängigkeit voneinander steuerbar sind.

10. Vorrichtung nach einem der Patentansprüche 1 bis 9, wobei die Vorrichtung mindestens eine Schnittstelle zur Verbindung mit einem elektronischen Gerät aufweist.

11. Vorrichtung nach einem der Patentansprüche 1 bis 10, wobei mindestens eines der durch die äußeren Wandabschnitte (24; 26), den Verbindungsabschnitt(28) und die Seitenwände (18; 20) gebildeten Aufnahmefächer (32; 34) an der Bodenfläche (36; 38) und/oder an den Seitenwänden (18, 20) mindestens ein verschwenkbar oder verschiebbar gelagertes Halteelement (60) aufweist, welches in das mindestens eine Aufnahmefach (32; 34) ragt und gegen die Kraft einer Federeinrichtung an oder in die Bodenfläche (36; 38) und/oder die Seitenwände (18, 20) verlagerbar ist.

12. Vorrichtung nach Patentanspruch 11, wobei das mindestens eine Haltelement (60) derart in das Aufnahmefach (32; 34) ragt, dass
- zwischen dem mindestens einen Halteelement (60) und einem Wandabschnitt (24; 26), dem Verbindungsabschnitt (28) oder einer Seitenwand (18; 20), oder
- zwischen mindestens zwei Halteelementen
ein solcher Abstand besteht, dass ein elektronisches Gerät dazwischen einsetzbar ist.

## Claims

1. Device for receiving beverage containers (12), electronic devices and utensils, comprising a reception (16) with a bottom surface and at least two opposite side walls (18, 20) running substantially parallel to one another, wherein an intermediate wall (22) extends between the two opposite side walls (18, 20) **characterized in that** the outer wall portions (24, 26) of the intermediate wall (22) run parallel to the opposite side walls (18, 20) and offset to one another and **in that** the outer wall portions (24, 26) are connected to one another via a connecting portion (28).

2. Device according to claim 1, wherein the outer wall portions (24, 26) and the connecting portion (28) are arranged such that the reception (16) substantially comprises two reception compartments (32, 34) of equal size.

3. Device according to claim 1 or 2, wherein the reception (16) comprises an opening on at least one side region between the two opposite side walls (18, 20).

4. Device according to one of claims 1 to 3, wherein the connecting portion (28) runs straight, curved or offset.

5. Device according to one of claims 1 to 4, wherein the bottom surface (36; 38) of one of the reception compartments (32; 34) formed by the outer wall portions (24; 26), the connecting portion (28) and the side walls (18; 20) comprises a lighting and/or the bottom surface (36; 38) comprises an light guide (40; 42) which extends along the bottom surface (36; 38) and/or the bottom surface (36; 38) comprises at least one transparent or partially transparent region which is arranged above a light guide and/or the light guide (40; 42) is made from a volume-streaming synthetic material.

6. Device according to claim 5, wherein the lighting comprises a luminous textile (48).

7. Device according to one of claims 5 or 6, wherein the light guide and/or the luminous textile (48) is connected to a light source and/or the light source comprises at least one light-emitting diode and/or the brightness and/or the color of the at least one light source is changeable and controllable.

8. Device according to one of claims 1 to 7, wherein the reception compartments (32; 34) formed by the outer wall portions (24; 26), the connecting portion (28) and the side walls (18; 20) comprise a soft coating on the facing sides.

9. Device according to one of claims 1 to 8, wherein the edges of the reception compartments (32; 34) formed by the outer wall portions (24; 26), the connecting portion (28) and the side walls (18; 20) comprise a circumferential rib, chamfer (54) and/or coating and/or at least the bottom surface (36; 38) of one of the reception compartments (32; 34) formed by the outer wall portions (24; 26), the connecting portion (28) and the side walls (18; 20) and/or the wall portions (24; 26), the connecting portion (28) and/or the side walls (18; 20) comprise tempering devices and/or the tempering devices and the at least one light source are controllable depending on one another.

10. Device according to one of claims 1 to 9, wherein the device comprises at least one interface for connecting with an electronic device.

11. Device according to one of claims 1 to 10, wherein at least one of the reception compartments (32; 34) formed by the outer wall portions (24; 26), the connecting portion (28) and the side walls (18; 20) comprises at least one holding element (60) supported on the bottom surface (36; 38) and/or the side walls (18; 20) in a pivotable or displaceable manner, which projects into the at least one reception compartment (32; 34) and is displaceable on or in the bottom surface (36; 38) and/or the side walls (18; 20) against the force of a spring device.

12. Device according to claim 11, wherein the at least one holding element (60) projects into the reception compartment (32; 34) in such a way that such a gap is present
- between the at least one holding element (60) and one wall portion (24; 26), the connecting portion (28) or one side wall (18; 20), or
- between at least two holding elements,
that an electronic device can be inserted between therebetween.

## Revendications

1. Un dispositif pour recevoir des récipients à boissons (12), des appareils électroniques et des ustensiles, comprenant un réceptacle (16) avec une surface inférieure et au moins deux parois latérales opposées (18; 20) disposées substantiellement de façon parallèle entre elles, dans lequel une paroi intermédiaire (22) est placée entre les deux parois latérales opposées (18; 20), **caractérisé en ce que** les parties externes des parois (24; 26) de la paroi intermédiaire (22) sont disposées de façon parallèle aux parois latérales opposées (18; 20) et tournées l'une vers l'autre, et que les parties externes des parois (24; 26) sont reliées entre elles à l'aide d'une section de liaison (28).

2. Le dispositif selon la revendication 1, dans lequel les parties externes des parois (24; 26) et la section de liaison (28) sont disposées d'une telle manière que le réceptacle (16) comprend substantiellement deux compartiments de réception (32; 34) ayant la même taille.

3. Le dispositif selon la revendication 1 ou 2, dans lequel le réceptacle (16) comprend une ouverture sur au moins une zone latérale entre les deux parois latérales opposées (18, 20).

4. Le dispositif selon une des revendications 1 à 3, dans lequel la section de liaison (28) est disposée de manière linéaire, courbée ou décalée.

5. Le dispositif selon une des revendications 1 à 4, dans lequel la surface inférieure (36; 38) d'un des compartiments de réception (32; 34) formé par les parties externes des parois (24; 26), la section de liaison (28) et les parois latérales (18; 20) comprend un éclairage et/ou la surface inférieure (36; 38) comprend de la fibre optique (40; 42) qui est placée le long de la surface inférieure (36; 38) et/ou la surface inférieure (36; 38) comprend au moins une zone transparente ou partiellement transparente qui est placée en dessus de la fibre optique et/ou la fibre optique (40; 42) est fabriquée en un matériau synthétique dispensant du volume.

6. Le dispositif selon la revendication 5, dans lequel l'éclairage comprend un tissu lumineux (48).

7. Le dispositif selon une des revendications 5 ou 6, dans lequel la fibre optique et/ou le tissu lumineux (48) est relié à une source de lumière et/ou la source de lumière comprend au moins une diode électroluminescente et/ou la luminosité et/ou la couleur de ladite au moins une source de lumière est modifiable est contrôlable.

8. Le dispositif selon une des revendications 1 à 7, dans lequel les compartiments de réception (32; 34) formés par les parties externes des parois (24; 26), la section de liaison (28) et les parois latérales (18; 20) comprennent un revêtement souple sur les parois opposées.

9. Le dispositif selon une des revendications 1 à 8, dans lequel les bords des compartiments de réception (32; 34) formés par les parties externes des parois (24; 26), la section de liaison (28) et les parois latérales (18; 20) comprennent une nervure circonférentielle, du chanfrein (54) et/ou un revêtement et/ou au moins la surface inférieure (36; 38) d'un des compartiments de réception (32; 34) formé par les parties externes des parois (24; 26), la section de liaison (28) et les parois latérales (18; 20) et/ou les parties des parois (24; 26), la section de liaison (28) et/ou les parois latérales (18; 20) comprennent des dispositifs de trempe et/ou les dispositifs de trempe et ladite au moins une source de lumière sont contrôlables dépendant l'un de l'autre.

10. Le dispositif selon une des revendications 1 à 9, dans lequel le dispositif comprend au moins une interface pour établir une liaison avec un dispositif électronique.

11. Le dispositif selon une des revendications 1 à 10, dans lequel au moins un des compartiments de réception (32; 34) formé par les parties externes des parois (24; 26), la section de liaison (28) et les parois latérales (18; 20) comprend au moins un élément de maintien (60) appuyé sur la surface inférieure (36; 38) et/ou les parois latérales (18; 20) d'une manière pivotante ou déplaçable de sorte à que l'élément de maintien peut être balancé vers ledit au moins un compartiment de réception (32; 34) et est déplaçable sur ou dans la surface inférieure (36; 38) et/ou les parois latérales (18; 20) contre la force d'un dispositif de ressort.

12. Le dispositif selon la revendication 11, dans lequel ledit au moins un élément de maintien (60) est balancé vers le compartiment de réception (32; 34) d'une manière telle que
- entre ledit au moins un élément de maintien (60) et une partie de la paroi (24; 26), la section de liaison (28) ou une paroi latérale (18; 20), ou
- entre au moins deux éléments de maintien
un écart est présent de sorte à qu'un appareil électronique peut être inséré entre eux.
